Europäisches Patentamt

European Patent Office

Office européen des brevets

(11) Publication number: **0 137 526**
**B1**

# EUROPEAN PATENT SPECIFICATION

(45) Date of publication of patent specification: **10.08.88**

(51) Int. Cl.⁴: **G 06 F 7/48**

(21) Application number: **84200991.2**

(22) Date of filing: **23.04.82**

(60) Publication number of the earlier application in accordance with Art. 76 EPC: **0 064 826**

(54) Arithmetic unit in data processing system with exponent overflow/underflow detection.

(30) Priority: **23.04.81 US 256726**
**23.04.81 US 256923**
**23.04.81 US 256772**

(43) Date of publication of application:
**17.04.85 Bulletin 85/16**

(45) Publication of the grant of the patent:
**10.08.88 Bulletin 88/32**

(84) Designated Contracting States:
**AT BE CH DE FR GB IT LI LU NL SE**

(56) References cited:

**IBM TECHNICAL DISCLOSURE BULLETIN, vol. 23, no. 1, June 1980, pages 252-254, New York, US; J.L. HALE et al.: "Biased and non-biased binary conversion and exponent under/over flow detection"**

(73) Proprietor: **DATA GENERAL CORPORATION**
**Route 9**
**Westboro Massachusetts 01581 (US)**

(72) Inventor: **Rosen, Josh**
**9A Lincoln Street**
**Westboro Massachusetts 01581 (US)**
Inventor: **Blau, Jonathan S.**
**143 Butternut Hollow**
**Nagog Woods Massachusetts 01718 (US)**

(74) Representative: **Pears, David Ashley**
**REDDIE & GROSE 16 Theobalds Road**
**London WC1X 8PL (GB)**

Courier Press, Leamington Spa, England.

## Description

This invention relates generally to data processing systems which utilize fixed and floating-point arithmetic units and, more particularly, to an improved technique for handling overflow and underflow conditions therein.

The representation of numbers in data processing systems, particularly non-integer numbers, requires the introduction of a radix point into the notation. For example, data processing systems may employ "fixed point notation" wherein the radix point is placed immediately to the right of the least significant bit ·or placed immediately to the right of the sign bit before the first information bit.

A further option is often referred to as "floating point notation" in which the numbers are represented by a sign, an exponent, and a mantissa. Such technique is described in many texts, one example being "Computer Architecture", Caxton C. Foster, Van Nostrand Reinhold Co., New York 1976, pages 16 et seq.

Calculations upon the mantissa may be performed by operating on groups of bits (i.e. "bit slices") of the mantissa words involved, the computation for each bit slice until the calculation is completed for the entire word. For example, overall mantissa words having 32 bits may use eight 4-bit slice logic units in such calculations.

If each bit slice is permitted to produce its "carry" bit only after the operation for such bit slice has occurred and the carry bit is then added to the next bit slice, the overall calculation time is considerably longer than desired. In order to reduce the overall calculation time, techniques for effectively computing the carry bits ahead of time, i.e. so-called "look ahead" carry bit techniques have been devised wherein the various carry bits are computed in parallel and simultaneously with the bit slice computation operations. Such techniques have been used for many years and are well known to those in the art.

Further, in calculating the exponent portion of a floating point result, if the calculation does not produce a value which falls within a particular exponent value range (i.e. a value having a particular number of bits), an "overflow" or an "underflow" condition occurs. If either such condition occurs, the system must provide an indication thereof so that appropriate sub-routines for handling such conditions can be invoked and the status of the floating point condition must be appropriately communicated to the overall system. In order to save time in the overall operation it is desirable to accelerate the detection and communication of exponent overflow and underflow conditions.

A system for detecting the existence of Exponent underflow and overflow is disclosed in IBM Technical disclosure bulletin Vol. 23 No. 1 pages 252—254.

According to the present invention there is provided a data processing system as defined by the appended claims to which reference should now be made.

In order to provide relatively fast detection of overflow and underflow conditions during exponent calculations, rather than making a complete addition of the exponent value and then detecting the overflow and underflow conditions thereafter, the system embodying the invention utilizes overflow/underflow logic which operates in parallel with the final exponent computation and in effect predicts whether or not an overflow or an underflow condition will exist in the final exponent calculation. In a preferred embodiment such logic uses an extra adder stage, together with associated logic to produce a signal which provides an indication to the system that an overflow or underflow condition exists.

The invention will be described in more detail, by way of example, with reference to the accompanying drawings, in which:

Fig. 1 shows a block diagram of an arithmetic unit for performing arithmetic calculations;

Fig. 2 shows specific 4-bit microprocessor slice logic units used in exponent calculations;

Fig. 3 shows a chart useful in explaining the overflow/underflow operation in accordance with the invention; and

Fig. 4 shows logic units used to detect overflow/underflow conditions and to provide an indication thereof to the data processor system.

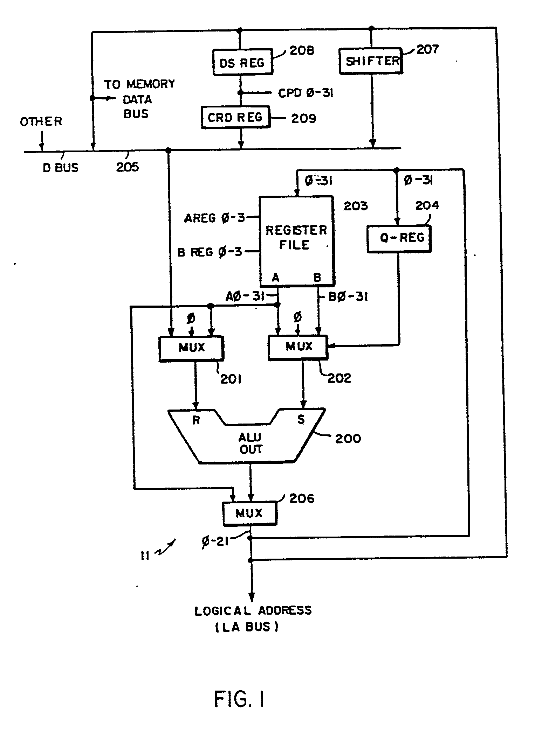

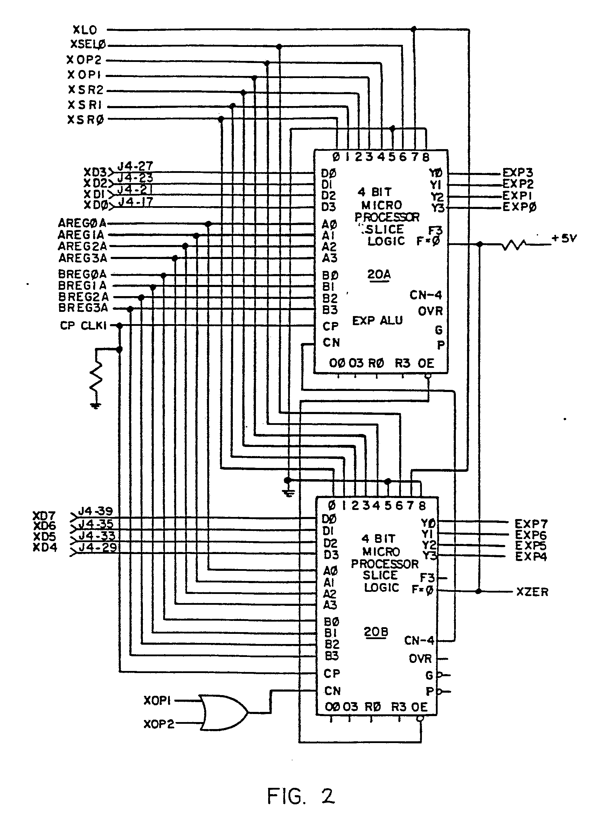

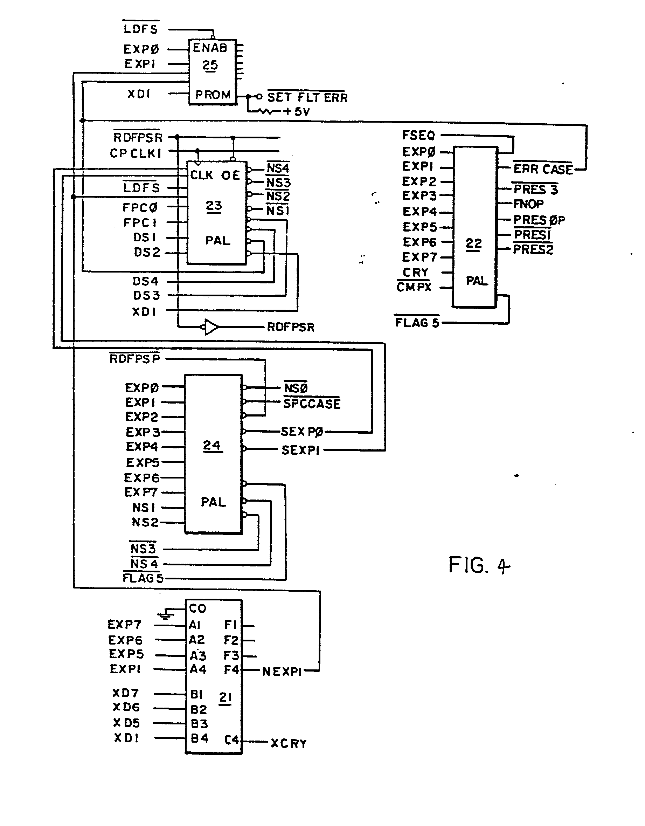

The invention disclosed herein can be best described in the context of a particular data processing system, such as that disclosed in EP 0 039 227. A broad block diagram of the arithmetic logic unit (ALU) used therein is shown in Fig. 154 of the application which is reproduced herein in Fig. 1. Specific logic diagrams required to understand the invention described herein are shown here in Figs. 2 and 4. In such system, as is conventional for 32-bit mantissa calculations, the computation is made in four-bit slices as shown by the eight microprocessor four-bit slice logic units 10A—10H. Two 4-bit values are operated on, and a 1-bit carry value is added to the result of this operation to produce the 4-bit output (DS-outputs). Thus the slice units produce an unrounded floating point result formed as the following 4-bit slices shown below:

As can be seen in the above diagram, in the 32-bit calculated word the 24 bits forming the six more significant 4-bit slices (bits 0—23) produce the unrounded floating point result, while the eight bits forming the two less significant 4-bit groups (bits 24—31) represent the bits which are used to determine the "round" bit, referred to as the "guard" bits. In each instance, each of the 4-bit slices effectively produces a carry (CRY) bit which is supplied to the next adjacent 4-bit slice, e.g. bit slice 0—3 is effectively supplied with the carry bit CRY4 from the 4-bit slice 4—7, the latter slice is supplied with CRY8 from 4-bit slice 8—11, and so on. The CRY31 bit is supplied from microcode, while the CRY0 bit is the carry bit for the final overall floating point result. In order to save time in the computation the carry bits are actually generated in parallel with the 4-bit computations in each of the 4-bit microprocessor slice logic units, the parallel carry bit calculations being performed in look ahead carry generator units. Thus, during such arithmetic operation cycle, the overall computation, is performed substantially simultaneously to form the unrounded 32-bit result.

The techniques used in accordance with the invention for detecting overflow and underflow conditions during computation of the exponent value in a floating point operation is specifically described, for convenience, with reference to the generation of a 7-bit exponent. The generation of a computed exponent value involves the addition of a first exponent value (AEXP) representing an exponent value stored in a particular register and a second exponent value (DEXP), representing an exponent value which is obtained, for example, from an external source. The AEXP and DEXP values are each defined by seven bits and their addition yields the desired exponent result (BEXP), which can be stored in another specified register. The above operation can be represented in accordance with the following relation:

$$AEXP + DEXP \rightarrow BEXP$$

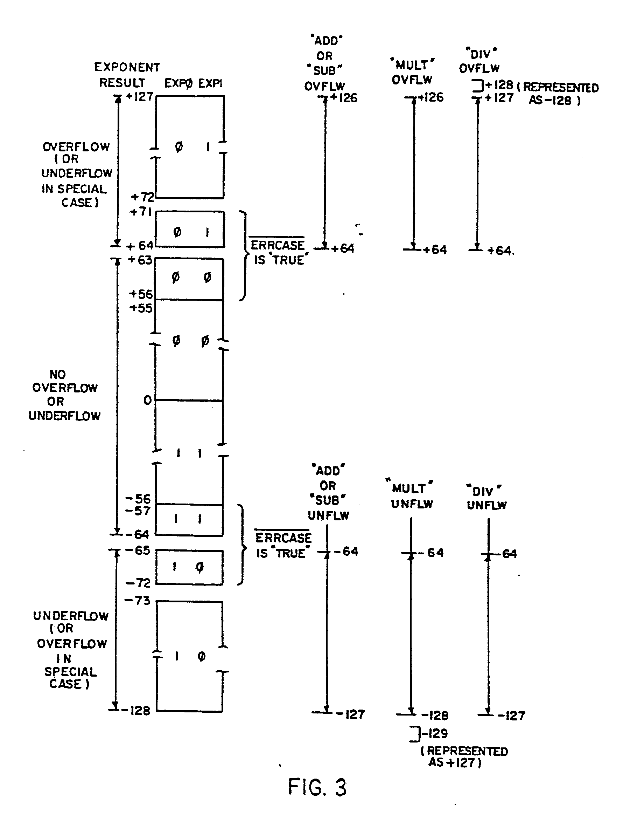

If the original exponents are each represented by 7-bit values and the arithmetic operation is performed as shown above, the useful result should also be expressed by 7 bits. If such result is expressed by more than 7 bits an overflow or underflow condition exists. More particularly, 7-bit exponents, during overflow or underflow, will never yield values that require more than eight bits. Such characteristics can be understood with the help of Fig. 3, wherein a 7-bit exponent defines 128 values within a range from −64 to +63, while an 8-bit exponent defines 256 values within a range from −128 to +127. Values from +64 to +127 and values from −65 to −128 are defined as representing an overflow or underflow condition (these decimal values are obtained by interpreting the 8-bit exponents as two's complement notation binary numbers).

Fig. 3 also depicts overflow/underflow conditions for addition, subtraction, multiplication and division operations. Thus, an addition or subtraction overflow occurs within a range from +64 to +126 while an addition or subtraction underflow occurs in a range from −64 to −127. A multiply overflow occurs in a range from +64 to +126 while a multiply underflow condition occurs in a range from −64 to −129. A division overflow occurs within a range from +64 to +128, while a division underflow occurs within a range from −64 to −127. Two special conditions should be pointed out. In the multiply underflow range a special condition occurs wherein −129 is represented as +127 and in the divide overflow range a special condition occurs wherein +128 is represented as −128.

The exponent calculation is performed in two 4-bit slices as shown in Fig. 2 by 4-bit microprocessor slice logic units 20A and 20B. AEXP is addressed from the A register (AREGØA—3A) while the externally sourced exponent DEXP is supplied as bits XDØ—XD7. During this calculation bits EXPØ—7 hold the AEXP value. BEXP is then calculated and supplied to the register addressed by the B register (BREGØA—3A).

The system must then provide an indication of an overflow or an underflow condition, i.e. when the result falls outside the 7-bit range, and provide a suitable signal which will enable an appropriate sub-routine for handling the particular identified overflow or underflow condition. Because of the particular conventional algorithm used, during the last cycle of the exponent calculation DEXP is limited to the value which lies within the range from −8 to +7. Thus, the value ranges of interest in the register AEXP (addressed by AREG) are shown in Fig. 3. They include a middle range from −56 to +55 in which it is clear there will be no overflow or underflow error condition (i.e. even where DEXP is at its −8 or +7 limits, the final result would not lie in an overflow or underflow range), an upper range from +72 to +127 and a lower range from −73 to −128. In the latter ranges it is clear that no matter what DEXP value during the last cycle, the final result would clearly be in an overflow or an underflow range. In the two cross-over ranges (+56 to +71) and (−57 to −72) the overflow or underflow conditions must be determined, depending on the value of the DEXP within its limits during the last cycle of the exponent calculation.

An NEXP1 bit is obtained by adding selected EXP1 and EXP5—7 of the AEXP with bits XD1 and XD5—7 of the DEXP, as shown by 4-bit adder unit 21 of Fig. 4. An $\overline{\text{ERR CASE}}$ signal is derived from AEXP bits EXPØ—7 via programmable array logic unit 22 in Fig. 4. The overflow/underflow status of the exponent calculation is defined by the $\overline{\text{NS1}}$ and $\overline{\text{NS2}}$ bits from programmable array logic (PAL) 23 in Fig. 4. In an overflow condition, programmable array logic 23 asserts an $\overline{\text{NS1}}$ signal while in an underflow condition an $\overline{\text{NS2}}$ bit is asserted. Bits SEXPØ and SEXP1 are derived from AEXP bits EXPØ—7 and signal $\overline{\text{FLAG 5}}$ indicating multiply or divide, in PAL 24.

This logic is provided to detect generally in which range the final floating point exponent result resides and, more particularly, provides a capability of determining where within the cross-over regions the final

3

result lies so as to determine whether an overflow or underflow condition exists within such latter regions. In order to do so, examination of the selected AEXP bits and the selected DEXP bits is made in accordance with the following chart, an explanation of which can be understood in connection with Fig. 3, by the above described logic. Note that signals SEXP0 and SEXP1 in all cases, except for the special case described in the chart and below, are equal to EXP0 and EXP1, respectively.

```
OVERFLOW (NS1)
        IF ERR CASE      SEXP0,1   = 00 ⎫      01 ⎫      01
           IS "TRUE"     NEXP1     =  1 ⎬OR    1 ⎬OR   (DON'T CARE)
                         XD1       =  0 ⎭      1 ⎭      0

        IF ERR CASE
                         SEXP0,1   = 01
           IS "FALSE"


UNDERFLOW (NS2)
        IF ERR CASE      SEXP0,1   = 11 ⎫      10 ⎫      10
           IS "TRUE"     NEXP1     =  0 ⎬or    0 ⎬or   (DON'T CARE)
                         XD1       =  1 ⎭      0 ⎭      1

        IF ERR CASE
                         SEXP0,1   = 10
           IS "FALSE"


SPECIAL CASE:
        SPC CASE IS "TRUE" when
           MULTIPLY UNDERFLOW  EXP = +127 (real value is −129, FLAG 5 is true)
                DIVISION OVERFLOW  EXP = −128 (real value is +128, FLAG 5 is false)


        IF SPC CASE IS "TRUE"    SEXP0,1   VALUES ARE INVERTED
                         SEXP0,1 ← EXP0,1


        IF SPC CASE IS "FALSE"  SEXP0,1   VALUES REMAIN THE SAME
                         SEXP0,1←EXP0,1
```

The cases set forth in the above chart depict the situations in which an overflow or an underflow condition exists in the final computed exponent result. The values of the condition indicator bits SEXP0,1, NEXP1, XD1 and ERR CASE are utilized during the last computation cycle in effect to predict the presence or absence or overflow or underflow condition in the final exponent result BEXP.

In order to access the desired sub-routine for handling overflow or underflow conditions, a signal for indicating that one of such conditions has occurred is provided to the system as the SET FLT ERR signal from PROM unit 25 (see Fig. 4). The latter signal is determined by the states of the first two AEXP indicator bits (directly accessible as EXP0 and EXP1 from 4-bit slice logic unit 20A), by the NEXP1 indicator bit (determined by selected EXP 1, 5, 6 and 7 and XD 1, 5, 6 and 7 bits as discussed above), by the ERR CASE indicator bit, and by indicator bit XD1, the second most significant bit of the DEXP, as shown in Fig. 4. The status of such bits in determining the overflow and underflow conditions is defined in the chart set forth above. In effect SET FLT ERR is, "true" when either NS1 or NS2 is "true".

While the add ("ADD") or subtract ("SUB") overflow and underflow conditions are relatively straightforward, as shown in Fig. 3, special cases exist for a multiply ("MULTI") calculation wherein an underflow condition exists over a range from −64 to −129 and for a divide ("DIV") calculation wherein an overflow condition exists over a range from +65 to +128. The special cases are as follows: in multiply at −129, which is represented as +127, and in divide at +128, which is represented as −128. Such special cases are determined by programmable array logic 24 in Fig. 4, wherein the AEXP bits EXP0—7 are examined as well as the signal FLAG 5 which is set "true" during multiply and "false" during divide by microcode. If a special case condition (+127 for a MULT and −128 for a DIV) exists, a SPCCASE signal is generated (SPCCASE is "true"). In such conditions the values of SEXP0 and SEXP1 must be inverted. That is, when SPCCASE is "true" SEXP0=EXP0 and SEXP1=EXP1. So long as SPCCASE is "false" no change is made in the values of SEXP0 and SEXP1. That is, SEXP0=EXP0 and SEXP1=EXP1.

Accordingly the above discussed logic not only computes the status of the floating point result but also simultaneously computes a SET FLT ERR signal which is supplied to the system (in this case the address translation unit (ATU) of the system shown in the aforementioned published application EP 0 039 227) for accessing the desired sub-routine for handling the overall exponent addition operation occurs in the computation of the floating point result (in the computation of the BEXP value).

The system described herein is also described in our co-pending application no. 82302080.5 (published as 0064826) to which reference is directed.

4

**0 137 526**

**Claims**

1. A data processing system comprising arithmetic computation means which includes means (20A, 20B) operating on a pair of exponent operands (AEXP, DEXP) for providing an arithmetic exponent result (BEXP) which may be subject to the occurrence of overflow or underflow conditions, one of said operands (AEXP) having a value which is capable of lying in a middle range in which case no overflow or underflow condition exists, in upper or lower ranges in which cases an overflow or underflow condition exists, or in cross-over ranges (ERRCASE TRUE) in which cases the existence of an overflow or an underflow condition depends on the value of the other of said exponent operands (DEXP), wherein the arithmetic computation means comprises means operable in parallel with the computation of the final arithmetic exponent result for detecting in which of said middle, upper, lower or cross-over ranges the first exponent value lies.

2. A data processing system in accordance with claim 1, characterised in that said detecting means includes means (24) responsive to one of said operands (AEXP (EXP0—7) to produce a pair of first exponent indicator bits (SEXP0,1); means (22) responsive to second selected bits of said one operand to produce a third exponent indicator bit (ERRCASE); and further means (21) responsive to first selected bits (EXP1, 5, 6, 7) of said one operand and to selected bits (XD1, 5, 6, 7) of the other of said operands (DEXP) to produce a second exponent indicator bit (NEXP); and means (23) responsive to the status of said first exponent indicator bits, to the status of said second exponent indicator bit, to the status of said third exponent indicator bit, and to the status of a selected bit (XD1) of said other operand for producing a first indication (NS1) when an overflow condition exists and a second indicator (NS2) when an underflow condition exists in said final arithmetic exponent result.

3. A data processing system in accordance with claim 2, characterised in that the said further means (21) is an adder logic means.

4. A data processing system in accordance with claim 3, characterized in that said exponent operands (AEXP, DEXP), each comprise eight bits and said means for providing said arithmetic exponent result includes two four-bit slice logic means (20A, 20B) and said adder logic means (21) is a four-bit adder.

5. A data processing system in accordance with claim 1, further characterised by means (25) operable in parallel with the computation of the final arithmetic exponent result for producing for said system a signal (SET FLT ERROR) indicating whether or not an overflow or an underflow condition exists.

6. A data processing system in accordance with any of claims 1 to 5, characterised in that said final arithmetic exponent result may lie in a range of values from +128 to −129, an overflow condition existing if said result lies within a range from +64 to +126 for addition, subtraction and multiply operations and within a range from +64 to +128 for a divide operation and an underflow condition existing if said result lies within a range from −64 to −127 for addition, subtraction or divide operations and within a range from −64 to −129 for a multiply operation.

**Patentansprüche**

1. Datenverarbeitungssystem mit einer arithmetischen Recheneinheit, die Mittel (20A, 20B) zum Bearbeiten eines Paars von Exponentoperanden (AEXP, DEXP) enthält, um ein arithmetisches Exponentergebnis (BEXP) zu erhalten, das Gegenstand des Erscheinens von Überlauf- oder Unterlauf-Bedingungen sein kann, wobei einer der Operanden (AEXP) einen Wert besitzt, der liegen kann in einem mittleren Bereich, in welchem Fall keine Überlauf- oder Unterlauf-Bedingung vorliegt, ferner in oberen oder unteren Bereichen, in welchem Fall eine Überlauf- oder Unterlauf-Bedingung vorliegt, oder in Überkreuzungsbereichen (ERRCASE TRUE), in welchem Fall die Existenz einer Überlauf- oder Unterlauf-Bedingung vom Wert des anderen der Exponentoperanden (DEXP) abhängt, und wobei die arithmetische Reheneinheit Detektions-Mittel enthält, die parallel mit der Berechnung des endgültigen arithmetischen Exponentergebnisses arbeiten, um festzustellen, in welchem der mittleren, oberen, unteren oder Kreuzungsbereichen der erste Exponentwert liegt.

2. Datenverarbeitungssystem nach Anspruch 1, dadurch gekennzeichnet, daß die Detektions-Mittel enthalten: Mittel (24), die auf einen der Operanden (AEXP, EXP0—7) ansprechen, um ein Paar erster Exponentindikatorbits (SEXP0,1) zu ereugen; ferner Mittel (22), die auf zweite ausgewählte Bits des einen Operanden ansprechen, um ein drittes Exponentindikatorbit (ERRCASE) zu erzeugen; ein weiteres Mittel (21), das auf erste ausgewählte Bits (EXP1, 5, 6, 7) des einen Operanden und ausgewählte Bits (XD1, 5, 6, 7) des anderen Operanden (DEXP) anspricht, um ein zweites Exponentindikatorbit (NEXPD) zu erzeugen; und Mittel (23), die auf den Status der ersten Exponentindikatorbits, auf den Status des zweiten Exponentindikatorbits, auf den Status des dritten Exponentindikatorbits und auf den Status eines ausgewählten Bits (XD1) des anderen Operanden ansprechen, um eine erste Anzeige (NS1) zu erzeugen, wenn in dem endgültigen arithmetischen Exponentergebnis eine Überlauf-Bedingung vorliegt, und um eine zweite Anzeige (NS2) zu erzeugen, wenn eine Unterlauf-Bedingung existiert.

3. Datenverarbeitungssystem nach Anspruch 2, dadurch gekennzeichnet, daß das weitere Mittel (21) ein logisches Addiermittel ist.

4. Datenverarbeitungssystem nach Anspruch 3, dadurch gekennzeichnet, daß die Exponentoperanden (AEXP, DEXP) je acht Bit enthalten, das Mittel zur Erzeugung des arithmetischen Exponentergebnisses zwei logische Vier-Bit-Blöcke (20A, 20B) enthält und das logische Addiermittel (21) ein Vier-Bit-Addierer ist.

5

5. Datenverarbeitungssystem nach Anspruch 1, gekennzeichnet durch Mittel (25), die parallel mit der Berechnung des endgültigen arithmetischen Exponentergebnisses arbeiten, um für dieses System ein Signal (SET FLT ERROR) zu erzeugen, das anzeigt, ob eine Überlauf- oder Unterlauf-Bedingung vorliegt oder nicht.

6. Datenverarbeitungssystem nach einem der Ansprüche 1 bis 5, dadurch gekennzeichnet, daß das endgültige arithmetische Exponentergebnis in einem Wertebereich von +128 bis −129 liegen kann, wobei eine Überlauf-Bedingung vorliegt, wenn dieses Ergebnis bei Additions-, Subtraktions- und Multiplikations-Operationen in einem Bereich von +64 bis +126 und bei Divisions-Operationen in einem Bereich von +64 und +128 liegt, und wobei eine Unterlauf-Bedingung vorliegt, wenn das Ergebnis bei Adiitions-, Subtraktions- und Divisions-Operationen innerhalb eines Bereichs von −64 bis −127 und bei Multiplikations-Operationen innerhalb eines Bereichs von −64 bis −129 liegt.

## Revendications

1. Système de traitement de données comprenant des moyens de calculs arithmétiques qui comprennent les moyens (20A, 20B) qui opèrent sur une paire d'opérandes exposant (AEXP, DEXP) pour fournir un résultat d'exposant arithmétique (BEXP) qui peut être sujet à l'intervention de conditions de dépassement vers le haut ou vers le bas, le premier desdits opérandes (AEXP) ayant une valeur pouvant se situer dans un intervalle moyen dans lequel cas aucune condition de dépassement vers le haut ou vers le bas ne survient, dans des intervalles supérieurs ou inférieurs auquel cas une condition de dépassement vers le haut ou vers le bas existe, ou dans des intervalles intermédiaires (CAS D'ERREUR VRAI) auquel cas l'existence d'une condition de dépassement vers le haut ou vers le bas dépend de la valeur de l'autre desdits opérandes d'exposant (DEXP), dans lequel les moyens de calcul arithmétiques comprennent des moyens qui peuvent fonctionner en parallèle avec le calcul du résultat final de l'exposant arithmétique pour détecter dans lequel desdits intervalles moyens, supérieurs, inférieurs ou intermédiaires est située la première valeur d'exposant.

2. Système de traitement de données selon la revendication 1, caractérisé en ce que les moyens de détection comprennant des moyens (24) réagissant à l'un desdits opérandes (AEXP, EXP0—7) pour fournir une paire de premiers bits indicateurs d'exposant (SEXP0,1); des moyens (22) réagissant à des seconds bits sélectionnés dudit premier opérande pour fournir un troisième bit indicateur d'exposant (CAS D'ERREUR); et des moyens supplémentaires (21) réagissant à des premiers bits sélectionnés (EXP1, 5, 6, 7) dudit premier opérande et à des bits sélectionnés (XD1, 5, 6, 7) de l'autre desdits opérandes (DEXP) pour fournir un second bit indicateur d'exposant (NEXP); et des moyens (23) réagissant à l'état desdits premiers bits indicateurs d'exposants, à l'état dudit second bit indicateur d'exposant, à l'état dudit troisième bit indicateur d'exposant, et à l'état d'un bit choisi (XD1) dudit autre opérande pour fournir un premier indicateur (NS1) lorsqu'une condition de dépassement vers le haut existe et un deuxième indicateur (NS2) lorsqu'il y a une condition de dépassement vers le bas dans ledit résultat final d'exposant arithmétique.

3. Système de traitement de données selon la revendication 2, caractérisé en ce que ledit moyen supplémentaire (21) est une logique d'addition.

4. Système de traitement de données selon la revendication 3, caractérisé en ce que lesdits opérandes d'exposant (AEXP, DEXP) comprennent chacun huit bits, et en ce que les moyens pour fournir ledit résultat d'exposant arithmétique comprennent deux moyens d'unité logiques en tranche de quatre bit (20A, 20B), et un ce que ledit moyen logique d'addition (21) est un additionneur à quatre bits.

5. Système de traitement de données selon la revendication 1, caractérisé en outre par un moyen (25) qui peut fonctionner en parallèle avec le calcul du résultat final de l'exposant arithmétique pour produire pour ledit système un signal SET FLT ERR) qui indique si oui ou non une condition de dépassement vers le haut ou vers le bas existe.

6. Système de traitement de données selon l'une quelconque des revendications 1 à 5, caractérisé en ce que ledit résultat final d'exposant arithmétique peut appartenir à un intervalle de valeurs allant de +128 à −129, une condition de dépassement vers le haut existant si ledit résultat appartient à l'intervalle allant de +64 à +126 pour des opérations d'addition, de soustraction ou de multiplication, et à un intervalle allant de +64 à +128 pour une opération de division, et une condition de dépassement vers le bas existant si ledit résultat appartient à un intervalle allant de −64 à −127 pour des opérations d'addition, de soustraction ou de division et à un intervalle allant de −64 à −129 pour une opération de multiplication.

FIG. I

FIG. 2

FIG. 3

FIG. 4